# EUROPÄISCHE PATENTSCHRIFT

(11) **EP 1 244 873 B1**
(45) Veröffentlichungstag und Bekanntmachung des Hinweises auf die Patenterteilung: **21.04.2004**
(21) Anmeldenummer: 00990016.8
(22) Anmeldetag: 22.12.2000
(51) Int. Cl.: F03D 1/06

(54) **VERWENDUNG EINER STOSSVERBINDUNG FÜR ROTORBLÄTTER**
USE OF A BUTT JOINT FOR ROTOR BLADES
L'EMPLOI D'UN ASSEMBLAGE BOUT A BOUT POUR PALES DE ROTOR

(30) Priorität: 24.12.1999 DE 19962989
(43) Veröffentlichungstag der Anmeldung: 02.10.2002
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2000/013167
(87) Internationale Veröffentlichungsnummer: WO 2001/048378

(56) Entgegenhaltungen:
- EP-A- 0 049 906
- EP-A- 0 892 177
- DE-A- 2 921 152
- US-A- 3 310 327

## Beschreibung

Die Erfindung betrifft die Verwendung einer Stoßverbindung von Bauteilen, bei der entlang einer Stoßfuge angeordnete Laschen die Stoßfuge überbrücken und mit ihren Enden jeweils unmittelbar an einem der zu verbindenden Bauteile mit geringem Längsabstand von der Stoßfuge befestigt sind.

Ähnlich Flugzeugpropellern haben die Rotoren von Windenergieanlagen Rotorblätter, die aus einem tragenden Holm - zumeist mit Ober- und Untergurt - und einem Hohlprofil bestehen, welches die aerodynamischen Eigenschaften des Rotors bestimmt. Die Hohlprofile bestehen heutzutage im allgemeinen aus Verbundwerkstoffen, nämlich Glas- oder Kohlefasern mit Polyester- oder Expoxidharzen als Binder. Üblich geworden ist die Fertigung der Rotorblatt-Hohlprofile (deren Querschnitt sich über die Länge im allgemeinen ändert) in Form zweier längsgeteilter Halbschalen, die mit dem Holm zum fertigen Blatt zusammengefügt werden.

Mit zunehmender Leistung moderner Windenergieanlagen werden auch deren Rotoren im Durchmesser größer, was die Fertigung entsprechend längerer Rotorblätter erfordert. Ist schon die Herstellung solch langer Rotorblätter, d.h. der dafür benötigten Halbschalen in einem Stück nicht unproblematisch (u.a. wegen des entsprechend großen Betriebsgebäudes), so stellt der anschließend erforderliche Transport an den Aufstellungsort der Windenergieanlage ein ernsthaftes Hindernis dar.

Aus der DE 29 21 152 A1 ist ein quergeteiltes Rotorblatt bekannt, dessen Hohlprofilteile mittels der eingangs beschriebenen Stoßverbindung verbunden sind. Dabei sind die Enden der Profilteile von Zugankern eingefasst, zwischen denen die Spannelemente in Form von Stahlseilen oder Stahllamellen gespannt sind, welche im Innern der Profilteile über die Blattlänge durchlaufen, ggf. auch durch zusätzliche Zwischenanker. Diese Anordnung ist insofern problematisch, als die spezifische Längenänderung der Spannelemente unter Temperaturschwankungen und/oder Zentrifugalkräften, die vom Ausdehnungskoeffizienten und Elastizitätsmodul des verwendeten Werkstoffes abhängt, sich wegen der großen Länge der Spannelemente in erheblichen absoluten Längenänderungen auswirkt, die von der Vorspannung der Spannelemente nicht aufgefangen werden können und zum Lockern der Stoßverbindung führen.

Ferner ist aus der US 3,310,327 A1 die eingangs geschilderte Stoßverbindung bekannt, die zum Verbinden vorgefertigter Bauteile von Gebäuden o.ä. dient. An den Enden der Laschen sind Bolzen befestigt, die über ihre gesamte Länge in das Vollmaterial der Bauteile eingreifen.

Erfindungsgemäß wird die aus der US 3,310,327 A1 bekannte Stoßverbindung mit der Maßgabe verwendet, dass die Bauteile geteilte Rotorblätter von Windenergieanlagen und die Laschen entlang der Teilungsfuge am Umfang der Profilteile angeordnet sind. Damit wird die Aufgabe gelöst, eine Stoßverbindung zu entwickeln, welche die aerodynamischen Eigenschaften des Rotorblattes nicht wesentlich beeinflußt, geringes Gewicht hat und vor allem imstande ist, den erheblichen Wechsellasten zu widerstehen, welchen die Rotorblätter im Betrieb einer Windenergieanlage ausgesetzt werden, ohne der Gefahr des Lockerns zu unterliegen. Die Laschen ersetzen in ihrer Gesamtheit die herkömmlich zur Verbindung von Rotorblätter übliche einstückige Flansch- bzw. die aus der DE 29 21 152 A1 bekannte ebenso einstückige Zugankerverbindung; sie sind wesentlich leichter als diese und können diskret in unterschiedlichen Abständen voneinander, nämlich in Abhängigkeit von den an der Teilungsfuge zu übertragenden Kräften über den Umfang des Rotorblattes verteilt angeordnet werden, so daß die Auslegung der Verbindung - bei sehr guter Krafteinleitung - hinsichtlich ihrer Betriebsfestigkeit einfacher möglich ist als bei einer der bekannten Flansch- oder Zugankerverbindungen. Obwohl diese Verbindungsart auch für längsgeteilte Rotorblätter angewendet werden kann, eignet sie sich besonders für quergeteilte Rotorblätter unrunden Querschnitts, wobei die Laschen am Umfang des Rotorblattes angeordnet sind.

Von besonderem Vorteil ist die Wartungsfreiheit der neuen Stoßverbindung, weil sie nicht selbstlösend ist und daher auch kein Vorspannungsverlust in Kauf genommen zu werden braucht.

Vorzugsweise besteht jede Laschenverbindung aus Doppellaschen mit je einer auf der Außenseite und der Innenseite des Rotorblattes angeordneten Lasche. Ferner ist vorteilhaft vorgesehen, daß jede Lasche mit einer definierten Zugkraft vorspannbar ist. Durch eine ausreichend große Zugkraft-Vorspannung wird erreicht, daß trotz Wechsellast-Beanspruchung (Zugkraft/Druckkraft) im Verlauf einer Umdrehung des Rotors es in der Stoßverbindung bei der Zugkraft bleibt und sich lediglich deren Größe über den Verlauf einer Umdrehung ändert.

Um die hierfür erforderliche Zugkraft-Vorspannung auf die einzelnen, gemeinsam die Stoßverbindung bildenden Laschen aufzubringen, istvorzugsweise vorgesehen, daß jede Lasche an den Bauteilen mittels zweier Bolzen befestigt ist und mindestens einer der Bolzen jeweils in dem Kontaktbereich mit der Lasche oder den Laschen eine keilförmige Abplattung in seiner Achsrichtung aufweist sowie unverdrehbar gehalten ist. Alternativ könnte der Bolzen auch teilkonisch ausgebildet sein, dann kann er auch verdreht werden. In jedem Falle findet beim Befestigen der Laschen, wenn diese mit ihren (entsprechend ausgebildeten) Enden über jenen Bolzen geschoben und in Richtung auf die betreffende Fläche des Rotorblattes gedrückt werden, zugleich der Aufbau einer Zugkraft-Vorspannung in Längsrichtung der Lasche und somit senkrecht zur Teilungsfuge statt. Um dies auf einfache Weise zu bewerkstelligen, besteht vorteilhaft der Bolzen aus einer mit den keilförmigen Abplattungen versehenen Hülse und einer diese axial durchsetzenden Schraube mit Mutter, wobei sowohl der Schraubenkopf als auch die Mutter mittels napfartiger Druckstücke auf die zugehörige Lasche drücken und diese durch Bewegung entlang der Keilfläche (oder Konusfläche) vorspannen.

Eine weitere Alternative der Vorspannmechanik kann darin bestehen, daß mindestens einer der Bolzen jeweils in den Kontaktbereichen mit den Laschen eine gegenüber seiner Achse exzentrische Ausbuchtung hat. Durch Verdrehen des Bolzens - der im übrigen zur Befestigung der Laschen nicht verdreht zu werden braucht - kann auch auf diese Weise die gewünschte Zugkraft-Vorspannung in der Lasche erzeugt werden.

Die Zeichnung veranschaulicht die Erfindung an einem Ausführungsbeispiel, darin zeigt:
- Fig. 1: in Draufsicht ein (einfach) quergeteiltes Rotorblatt für den Rotor einer Windenergieanlage in schematischem Querschnitt (der Spalt zwischen den Teilen dient nur der Anschaulichkeit);
- Fig. 2: eine Draufsicht auf den Abschnitt x der erfindungsgemäßen Stoßverbindung zwischen den beiden Rotorblatt-Teilen in Fig. 1;
- Fig. 3: in perspektivischer Ansicht die gesamte, jedoch wie in Fig. 1 aufgeschnittene Stoßverbindung zwischen den beiden Rotorblatt-Teilen in Fig. 1;
- Fig. 4: einen vergrößerten Längsschnitt durch eine der in ihrer Gesamtheit die Stoßverbindung bildenden Laschenverbindungen;
- Fig. 5: eine Draufsicht auf die Laschenverbindung in Fig. 4; und
- Fig. 6: eine Ausschnittsdarstellung gemäß der Linie A-A in Fig. 4.

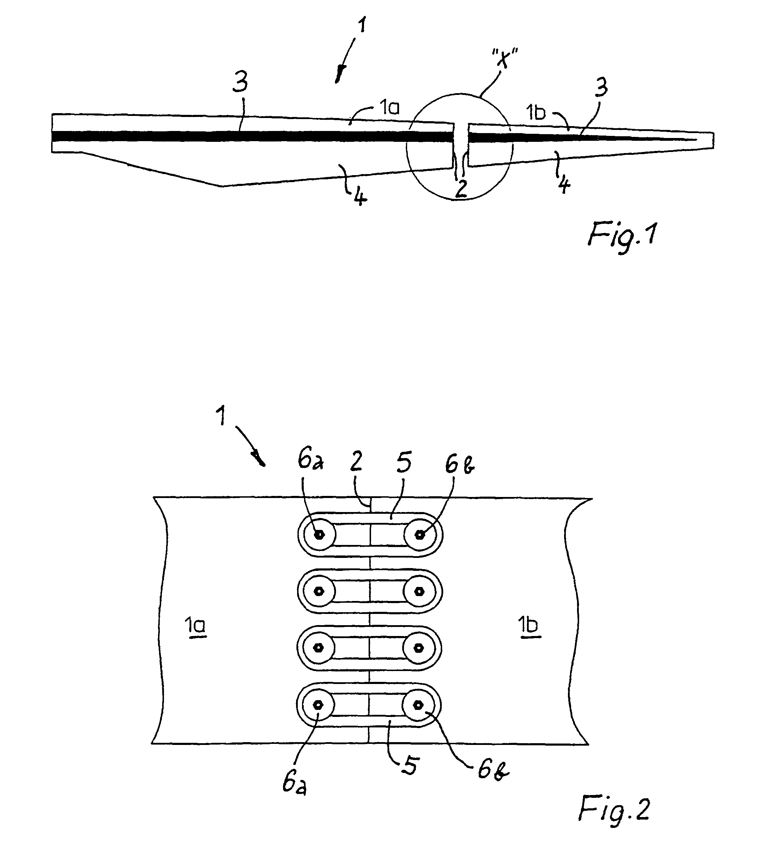

Fig. 1 zeigt ein quergeteiltes Rotorblatt einer Windenergieanlage in schematischem Querschnitt. Die Teilungsfuge 2 zwischen den Teilen 1a und 1b des Rotorblatts 1 ist geöffnet. Beide Rotorblatt-Teile 1a und 1b bestehen aus einem tragenden Kernprofil 3 und einer aerodynamisch geformten Schale 4.

Fig. 2 zeigt in Draufsicht einen Ausschnitt auf die Stoßverbindung zwischen den Teilen 1a und 1b des Rotorblatts 1 bei geschlossener Teilungsfuge 2. Die Stoßverbindung besteht aus einer Vielzahl von Laschen 5, welche die Teilungsfuge 2 überbrücken und mittels Bolzen 6a, 6b jeweils an beiden Rotorblatt-Teilen 1a, 1b befestigt sind.

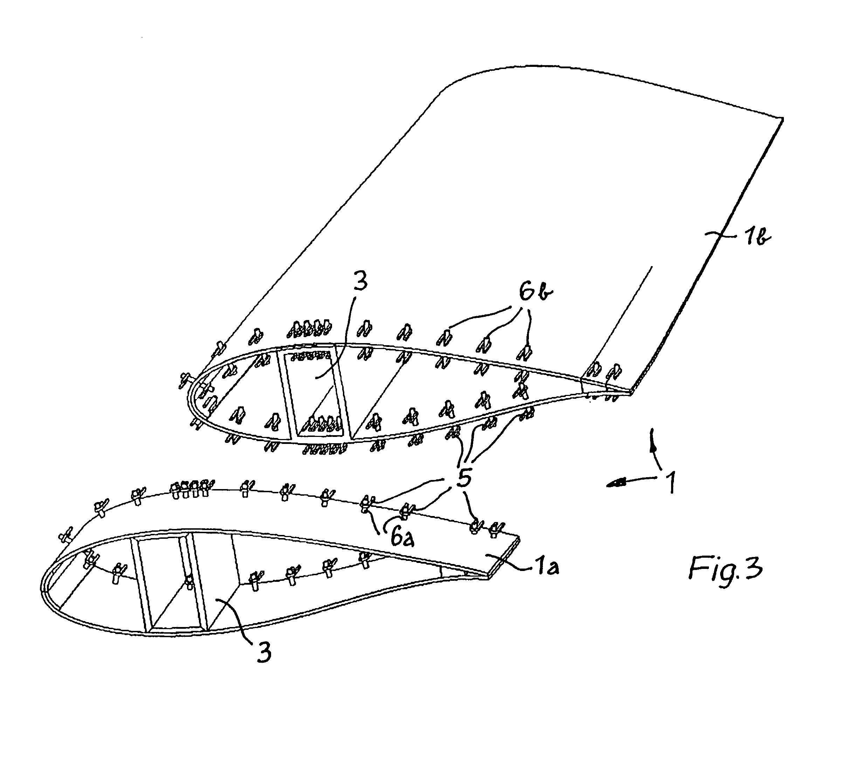

In Fig. 3 ist - wie in Fig. 1 - die Teilungsfuge 2 geöffnet, und Abschnitte der beiden Rotorblatt-Teile 1a, 1b sind perspektivisch dargestellt. Auch die Laschen 5 sind (nur zwecks Veranschaulichung) aufgeschnitten, und die Gesamtansicht der (aufgetrennten) Stoßverbindung zeigt, wie die Laschen 5 mit ihren Bolzen 6a, 6b über den - unrunden - Querschnitt des geteilten Hohlprofils verteilt sind. Im Bereich des Kernprofils 3 ist, weil dort die höchste Kraftübertragung erfolgt, die Anordnung der Laschen 5 am dichtesten; in den übrigen Bereichen sind größere Abstände zwischen den Laschen 5 vorgesehen.

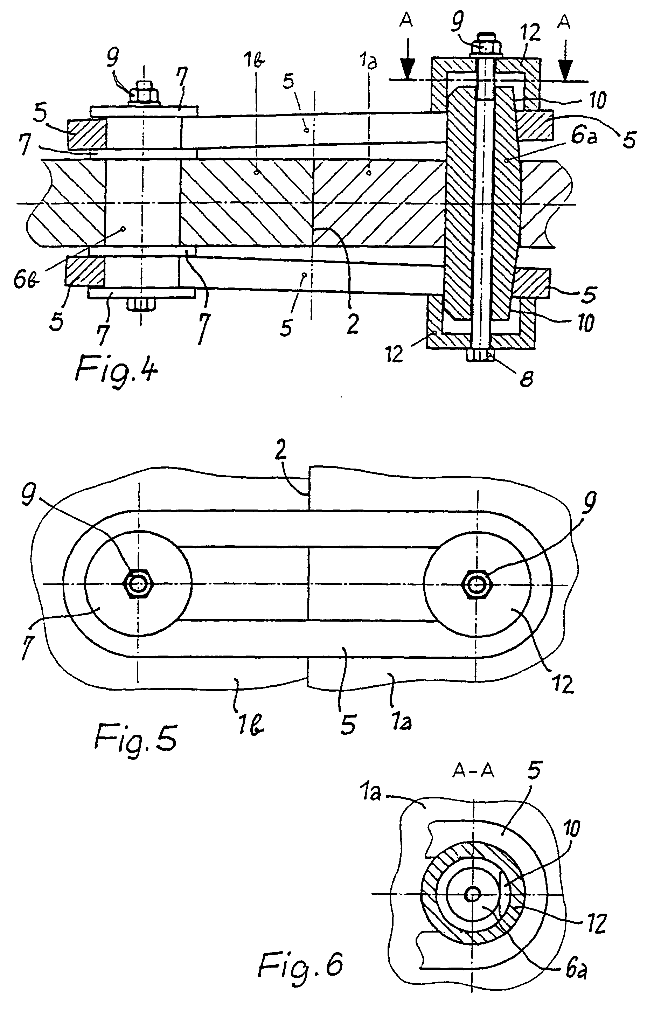

Die Fig. 4 bis 6 veranschaulichen eine Laschenverbindung im Detail. Oberhalb und unterhalb der Hohlprofil-Teile 1a, 1b ist jeweils eine Lasche 5 angeordnet. Am Teil 1b sind beide Laschen 5 mittels eines Bolzens 6b unter Zwischenschaltung von Scheiben 7 durch eine Schraube 8 mit Mutter 9 befestigt. Am Teil 1a ist die Befestigung der Laschen 5 ähnlich, jedoch hat der Bolzen 6a keilförmige Abplattungen 10, die sich von der Bolzenmitte zu seinen Enden und zur Achse 11 der (längeren) Schraube 8 mit Mutter 9 hin verjüngen. Zwischen dem Kopf der Schraube 8 und der ihr benachbarten Lasche 5 einerseits sowie zwischen der Mutter 9 und der ihr benachbarten Lasche 5 andererseits sind napfartige Druckstücke 12 vorgesehen. Wird die Schraube 8 mit der Mutter 9 angezogen, so üben die Druckstücke 12 entsprechende Kräfte auf die Laschen 5 aus; ihre Annäherung insbesondere an das Profilteil 1a läßt sie entlang den Abplattungen 10 des Bolzens 6a aufwärts gleiten, wodurch in den Laschen 5 eine Zugspannung aufgebaut wird (in den Kontaktbereichen der Laschen 5 mit den Abplattungen 10 kann die Innenwandung der Laschen 5 den Flächen der Abplattungen 10 angepaßt sein). Die Zugspannung in den Laschen 5 führt zu einer Schließ-Druck-Spannung auf die Hohlprofil-Teile 1a, 1b im Bereich ihrer Teilungsfuge 2.

## Patentansprüche

1. Verwendung einer Stoßverbindung von Bauteilen, bei der entlang einer Stoßfuge angeordnete Laschen die Stoßfuge überbrücken und mit ihren Enden jeweils unmittelbar an einem der zu verbindenden Bauteile mit geringem Längsabstand von der Stoßfuge befestigt sind,
**dadurch gekennzeichnet, dass** die Bauteile geteilte Rotorblätter von Windenergieanlagen und die Laschen (5) entlang der Teilungsfuge (2) am Umfang der Bauteile (1a, 1b) angeordnet sind.

2. Verwendung nach Anspruch 1,
**dadurch gekennzeichnet, daß** die Anordnungsdichte der Laschen (5) entlang der Teilungsfuge (2) in Abhängigkeit von den an der Teilungsfuge (2) zu übertragenden Zugkräften unterschiedlich ist.

3. Verwendung nach Anspruch 1 oder 2,
**dadurch gekennzeichnet, daß** jeweils Doppellaschen mit je einer auf der Außenseite und der Innenseite des Rotorblattes (1) angeordneten Lasche (5) vorgesehen sind.

4. Verwendung nach einem der vorhergehenden Ansprüche,
**dadurch gekennzeichnet, daß** jede Lasche (5) bzw. Doppellasche mit einer definierten Zugkraft vorspannbar ist.

5. Verwendung nach Anspruch 4,
**dadurch gekennzeichnet, daß** die Laschen (5) an den Bauteilen (1a, 1b) mittels zweier Bolzen (6a, 6b) befestigt sind und mindestens einer der Bolzen (6a) jeweils in den Kontaktbereichen mit den Laschen (5) eine keilförmige Abplattung (10) in seiner Achsrichtung aufweist sowie unverdrehbar gehalten ist.

6. Verwendung nach Anspruch 3 und 5,
**dadurch gekennzeichnet, daß** der Bolzen (6a) aus einer mit den keilförmigen Abplattungen (10) versehenen Hülse und einer diese axial durchsetzenden Schraube (8) mit Mutter (9) besteht, wobei sowohl der Schraubenkopf als auch die Mutter mittels napfartiger Druckstücke (12) auf die zugehörige Lasche (5) drücken und diese durch Bewegung entlang der Keilfläche vorspannen.

7. Verwendung nach Anspruch 4,
**dadurch gekennzeichnet, daß** die Laschen (5) an den Bauteilen (1a, 1b) mittels zweier Bolzen (6) befestigt sind und mindestens einer der Bolzen jeweils in den Kontaktbereichen mit den Laschen (5) eine gegenüber seiner Achse exzentrische Ausbuchtung hat.

## Claims

1. Use of a butt connection for components, in the case of which straps arranged along a butt joint span the butt joint and have their ends fastened in each case directly on one of the components which is to be connected, at a small longitudinal spacing from the butt joint, **characterized in that** the components are divided rotor blades of wind power installations and the straps (5) are arranged along the dividing joint (2), on the periphery of the components (1a, 1b).

2. Use according to Claim 1, **characterized in that** the density with which the straps (5) are arranged along the dividing joint (2) differs in dependence on the tensile forces which are to be transmitted at the dividing joint (2).

3. Use according to Claim 1 or 2, **characterized in .that** double straps with in each case one strap (5) arranged on the outside and the inside of the rotor blade (1) are provided in each case.

4. Use according to one of the preceding claims, **characterized in that** each strap (5) or double strap can be prestressed with a defined tensile force.

5. Use according to Claim 4, **characterized in that** the straps (5) are fastened on the components (1a, 1b) by means of two pins (6a, 6b), and at least one of the pins (6a), in the regions of contact with the straps (5) in each case, has a wedge-shaped flattening (10) in its axial direction and is retained in a non-rotatable manner.

6. Use according to Claims 3 and 5, **characterized in that** the pin (6a) comprises a sleeve, provided with the wedge-shaped flattenings (10), and a bolt (8), which passes axially through this sleeve and has a nut (9), both the head of the bolt and the nut pressing onto the associated strap (5) by means of cup-like pressure-exerting elements (12) and prestressing the same by movement along the wedge surface.

7. Use according to Claim 4, **characterized in that** the straps (5) are fastened on the components (1a, 1b) by means of two pins (6), and at least one of the pins, in the regions of contact with the straps (5) in each case, has an eccentric convexity in relation to its axis.

## Revendications

1. Utilisation d'un joint bout à bout d'éléments de construction, pour laquelle des couvre-joints disposés le long d'un joint vif forment un pont au-dessus du joint vif et sont fixés avec leurs extrémités respectivement directement sur l'un des éléments de construction à relier avec un faible écart de longueur par rapport au joint vif, **caractérisée en ce que** les pales de rotor séparées en éléments de construction par des installations d'énergie éolienne et les couvre-joints (5) sont disposés le long du joint de séparation (2) au niveau du périmètre des' éléments de construction (1a, 1B).

2. Utilisation selon la revendication 1, **caractérisée en ce que** la densité de la disposition des couvre-joints (5) le long du joint de séparation (2) est différent selon les forces de traction à exercer au niveau du joint de séparation (2).

3. Utilisation selon l'une quelconque des revendications 1 ou 2, **caractérisée en ce que** les couvre-joints doubles sont prévus respectivement avec un des couvre-joints (5) disposé sur la face extérieure et l'autre sur la face intérieure de la pale du rotor (1).

4. Utilisation selon l'une quelconque des revendications précédentes, **caractérisée en ce que** chaque couvre-joint (5) et/ou couvre-joint double peut être précontraint avec une force de traction prédéterminée.

5. Utilisation selon la revendication 4, **caractérisée en ce que** les couvre-joints (5) sont fixés aux éléments de construction (1a, 1b) au moyen de deux boulons (6a, 6b) et **en ce qu'**au moins un des boulons (6a) présente respectivement dans les zones de contact avec les couvre-joints (5) un aplatissement cunéiforme (10) dans le sens de son axe et est également maintenu sans pouvoir pivoter.

6. Utilisation selon les revendications 3 et 5, **caractérisée en ce que** le boulon (6a) se compose d'un manchon prévu avec des aplatissements cunéiformes (10) et d'une de ces vis (8) entremêlée de façon axiale avec un écrou (9), la tête de vis ainsi que l'écrou appuyant sur le couvre-joint (5) correspondant au moyen d'une plaque d'appui (12) en forme de cuvette et précontraignant celle-ci par un mouvement le long de la surface cunéiforme.

7. Utilisation selon la revendication 4, **caractérisée en ce que** les couvre-joints (5) sont fixés aux éléments de construction (1a, 1b) au moyen de deux boulons (6) et **en ce qu'**au moins un des boulons dispose respectivement d'une courbure excentrique par rapport à son axe dans les zones de contact avec les couvre-joints (5).
